# EUROPÄISCHE PATENTSCHRIFT

(11) **EP 1 671 196 B1**
(45) Veröffentlichungstag und Bekanntmachung des Hinweises auf die Patenterteilung: **10.01.2007**
(21) Anmeldenummer: 04786786.6
(22) Anmeldetag: 16.09.2004
(51) Int. Cl.: G05D 1/02

(54) **VERFAHREN UND VORRICHTUNG ZUR FAHRSPURERKENNUNG FÜR EIN FAHRZEUG**
METHOD AND DEVICE FOR LANE RECOGNITION FOR A VEHICLE
PROCEDE ET DISPOSITIF POUR IDENTIFIER LA VOIE DE CIRCULATION D'UN VEHICULE

(30) Priorität: 30.09.2003 DE 10345802
(43) Veröffentlichungstag der Anmeldung: 21.06.2006
(73) Patentinhaber: ROBERT BOSCH GMBH, 70442 Stuttgart (DE)
(72) Erfinder: LEINEWEBER, Thilo, 70174 Stuttgart (DE); URBAN, Werner, 71665 Vaihingen/Enz (DE); HENN, Ruediger-Walter, 70599 Stuttgart (DE)
(86) Internationale Anmeldenummer: PCT/DE2004/002067
(87) Internationale Veröffentlichungsnummer: WO 2005/040950

(56) Entgegenhaltungen:
- DE-A1- 10 115 551
- US-A1- 2001 025 211
- US-B1- 6 356 206

## Beschreibung

Die vorliegende Erfindung betrifft ein Verfahren und eine Vorrichtung zur Fahrspurerkennung für ein Fahrzeug, das mit einer adaptiven Abstands- und Geschwindigkeitsregelung ausgestattet ist, wobei dem adaptiven Abstands- und Geschwindigkeitsregler mittels einem Objektdetektionssystem die Relativgeschwindigkeit detektierter Objekte, der seitliche Versatz der detektierten Objekte bezüglich der Fahrzeuglängsachse und die Geschwindigkeit des eigenen Fahrzeugs zugeführt wird. Aus der Relativgeschwindigkeit der Objekte und der eigenen Fahrzeuggeschwindigkeit wird ermittelt, ob es sich um ein entgegenkommendes, stehendes oder in die gleiche Richtung, wie das eigene Fahrzeug, bewegtes Objekt handelt. In Verbindung mit dem berechneten, lateralen Querversatz des Objektes bezüglich der Fahrzeuglängsachse wird die Anzahl der vorhandenen Fahrspuren und die momentan durch das eigene Fahrzeug befahrene Fahrspur ermittelt.

### Stand der Technik

Aus der Veröffentlichung "Adaptive Cruise Control System, Aspects and Development Trends" von Winner, Witte, Uhler und Lichtenberg, veröffentlicht auf der SAE International Congress and Exposition, Detroit, 26.-29.02.1996, ist ein adaptiver Abstands- und Geschwindigkeitsregler bekannt, der Radarwellen aussendet und die an Objekten reflektierten Radarteilwellen empfängt. Aus den empfangenen Radarteilwellen kann der Abstand, die Relativgeschwindigkeit sowie der Azimutwinkel des erkannten Objekts bezüglich der Fahrzeuglängsachse ermittelt werden. Weiterhin wird dem adaptiven Abstands- und Geschwindigkeitsregler die Geschwindigkeit des eigenen Fahrzeugs zugeführt. Bei einem erkannten, vorherfahrenden Fahrzeug wird die Geschwindigkeit des eigenen Fahrzeugs im Sinne einer Abstandskonstantregelung geregelt und bei Nichtvorhandensein eines vorherfahrenden Fahrzeugs wird die Geschwindigkeit des eigenen Fahrzeugs im Sinne einer Konstantgeschwindigkeitsregelung auf eine vom Fahrer vorgegebene Setzgeschwindigkeit vorgenommen.

Aus der DE 101 15 551 A1 ist eine modellgestützte Fahrspurzuordnung für Fahrzeuge bekannt, bei der eine Fahrspurzuordnung von aufeinanderfolgenden Fahrzeugen vorgenommen wird, wobei die Fahrspurzuordnung modellgestützt über eine Häufigkeitsverteilung der Querversätze von erfassten Radarobjekten erfolgt. Ergänzend kann dieses Verfahren zur Dejustageerkennung des Sensors verwendet werden.

Die US 2001/025211 A1 offenbart ebenfalls ein Verfahren zur Fahrspurerkennung für ein Fahrzeug mit adaptiver Abstands- und Geschwindigkeitsregelung, bei dem anhand der Relativgeschwindig-keiten ermittelt wird, ob es sich um stehende, mit fahrende oder entgegenkommende Objekte handelt. Kern und Vorteile der Erfindung Der Kern der vorliegenden Erfindung ist es, ein Verfahren und eine Vorrichtung anzugeben, die es gestatten, mittels der Daten eines Objektdetektionssystems den Abstand, den Azimutwinkel sowie die Relativgeschwindigkeit erkannter Objekte sowie die eigene Fahrzeuggeschwindigkeit zu erfassen und in Abhängigkeit dieser Daten die Anzahl der vorhandenen Fahrspuren der momentan befahrenen Straße sowie die momentan befahrene Fahrspur auf der Straße anzugeben. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafter Weise wird bei rechtssinnigem Verkehr eine Fahrt auf einer einspurigen Straße erkannt, wenn Objekte detektiert werden, die eine negative Relativgeschwindigkeit aufweisen, die betragsmäßig größer ist, als die eigene Fahrzeuggeschwindigkeit und die einen linksseitigen, lateralen Querversatz aufweisen, der betragsmäßig kleiner als ein vorbestimmter Fahrspurbreitenwert ist, und beziehungsweise oder Objekte detektiert werden, die eine negative Relativgeschwindigkeit aufweisen, die betragsmäßig in etwa der eigenen Fahrzeuggeschwindigkeit entspricht und die einen rechtsseitigen, lateralen Querversatz aufweisen, der betragsmäßig kleiner als ein vorbestimmter Fahrspurbreitenwert ist, und beziehungsweise oder Objekte detektiert werden, die eine negative Relativgeschwindigkeit aufweisen, die betragsmäßig in etwa der eigenen Fahrzeuggeschwindigkeit entspricht und die einen linksseitigen, lateralen Querversatz aufweisen, der betragsmäßig größer als ein vorbestimmter Fahrspurbreitenwert ist.

Weiterhin ist es vorteilhaft, dass bei rechtssinnigem Verkehr eine Fahrt auf einer mehrspurigen Straße erkannt wird, wenn Objekte detektiert werden, die eine negative Relativgeschwindigkeit aufweisen, die betragsmäßig größer ist, als die eigene Fahrzeuggeschwindigkeit und die einen linksseitigen, lateralen Querversatz aufweisen, der betragsmäßig größer als ein vorbestimmter Fahrspurbreitenwert ist.

Weiterhin ist es vorteilhaft, dass die Benutzung der linken Fahrspur einer mehrspurigen Straße erkannt wird, wenn Objekte detektiert werden, die eine negative Relativgeschwindigkeit aufweisen, die betragsmäßig in etwa der eigenen Fahrzeuggeschwindigkeit entspricht und die einen linksseitigen, lateralen Querversatz aufweisen, der betragsmäßig kleiner als ein vorbestimmter Fahrspurbreitenwert ist und beziehungsweise oder Objekte detektiert werden, die entweder eine positive Relativgeschwindigkeit oder eine negative Relativgeschwindigkeit, die betragsmäßig etwa zwischen Null und der eigenen Fahrzeuggeschwindigkeit liegt, aufweisen, und einen rechtsseitigen, lateralen Querversatz aufweisen.

Weiterhin ist es vorteilhaft, dass die Benutzung einer mittleren Fahrspur einer mehrspurigen Straße erkannt wird, wenn Objekte detektiert werden, die eine negative Relativgeschwindigkeit aufweisen, die betragsmäßig in etwa der eigenen Fahrzeuggeschwindigkeit entspricht und die einen beliebigen, lateralen Querversatz aufweisen, der betragsmäßig größer als ein vorbestimmter Fahrspurbreitenwert ist und beziehungsweise oder Objekte detektiert werden, die entweder eine positive Relativgeschwindigkeit oder eine negative Relativgeschwindigkeit, die betragsmäßig etwa zwischen Null und der eigenen Fahrzeuggeschwindigkeit liegt, aufweisen, und einen betragsmäßig beliebigen, lateralen Querversatz aufweisen.

Weiterhin ist es vorteilhaft, dass die Benutzung der rechten Fahrspur einer mehrspurigen Straße erkannt wird, wenn Objekte detektiert werden, die eine negative Relativgeschwindigkeit aufweisen, die betragsmäßig in etwa der eigenen Fahrzeuggeschwindigkeit entspricht und die einen rechtsseitigen, lateralen Querversatz aufweisen, der betragsmäßig kleiner als ein vorbestimmter Fahrspurbreitenwert ist und beziehungsweise oder Objekte detektiert werden, die entweder eine positive Relativgeschwindigkeit oder eine negative Relativgeschwindigkeit, die betragsmäßig etwa zwischen Null und der eigenen Fahrzeuggeschwindigkeit liegt, aufweisen, und einen linksseitigen, lateralen Querversatz aufweisen.

Besonders vorteilhaft ist es, dass, wenn eine Fahrt auf einer einspurigen Straße erkannt wird, der Teil des Sichtbereichs des Objektdetektionssystem, in dem die erkannten Objekte zur Regelung berücksichtigt werden können, auf größere, linksseitige und rechtsseitige, laterale Querversätze erweitert wird.

Besonders vorteilhaft ist es, dass, wenn die Benutzung der linken Fahrspur einer mehrspurigen Straße erkannt wird, der Teil des Sichtbereichs des Objektdetektionssystem, in dem die erkannten Objekte zur Regelung berücksichtigt werden können, auf größere, linksseitige, laterale Querversätze erweitert wird.

Vorteilhafterweise wird bei Erkennen der Benutzung der rechten Fahrspur einer mehrspurigen Straße der Teil des Sichtbereichs des Objektdetektionssystem, in dem die erkannten Objekte zur Regelung berücksichtigt werden können, auf größere, rechtsseitige, laterale Querversätze erweitert.

Weiterhin ist es vorteilhaft, dass die ermittelte Anzahl an Fahrspuren und die Erkennung der momentan befahrenen Fahrspur erst dann wirksam wird, wenn das ermittelte Ergebnis über eine vorbestimmte Zeitdauer unverändert bleibt. Dies hat den Vorteil, dass erst bei einer sicheren Erkenntnis der vorhandenen Fahrspuranzahl oder bei sicherer Erkenntnis der momentan verwendeten Fahrspur diese dem Regler zugeführt werden und entsprechende Änderungen des Teils des Sichtbereichs des Objektdetektionssystem, in dem die erkannten Objekte zur Regelung berücksichtigt werden können, oder der Regelparameter erfolgt.

Weiterhin ist es vorteilhaft, dass der vorbestimmte Fahrspurbreitenwert zwischen 3,4 Meter und 3,8 Meter beträgt.

Weiterhin ist es vorteilhaft, dass das Objektdetektionssystem einen Radarsensor, einen Lasersensor, einen Ultraschallsensor, einen Videosensor oder eine Kombination hieraus aufweist.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

Die von dem Objektdetektionssystem 2 ermittelte Relativgeschwindigkeit Vrel des detektierten Objektes ist im Rahmen der vorliegenden Erfindung so definiert, dass eine negative Relativgeschwindigkeit vorliegt, wenn es sich um ein entgegenkommendes Fahrzeug handelt oder um ein in die gleiche Richtung, wie das eigene Fahrzeug 1 bewegtes Objekt handelt, das jedoch eine geringere Geschwindigkeit wie das eigene Fahrzeug aufweist. Demnach sind positive Relativgeschwindigkeiten derart definiert, dass es sich hierbei um bewegte Objekte handelt, die sich in die gleiche Richtung wie das eigene Fahrzeug 1 bewegen, jedoch mit einer höheren Geschwindigkeit, so dass sich diese von dem eigenen Fahrzeug 1 wegbewegen. Demnach sind Objekte mit negativer Relativgeschwindigkeit, Objekte, die sich relativ auf das eigene Fahrzeug bezogen, auf dieses zubewegen, und damit entweder entgegenkommende Fahrzeuge sind oder Fahrzeuge sind, die sich in die gleiche Richtung wier das eigenen Fahrzeug bewegen, jedoch mit geringerer Absolutgeschwindigkeit, als das eigene Fahrzeug.

Zeichnungen

Nachfolgend werden Ausführungsbeispiele der Erfindung anhand von Zeichnungen erläutert. Es zeigen
- Figur 1: eine erste Umfeldsituation, wie sie während dem erfindungsgemäßen Betrieb vorkommen kann,
- Figur 2: eine zweite Umfeldsituation, die während dem erfindungsgemäßen Betrieb vorkommen kann,
- Figur 3: den sowohl links-, als auch rechtsseitig erweiterbaren Sensorsichtbereich und
- Figur 4: ein Blockschaltbild eines Ausführungsbeispiels der erfindungsgemäßen Vorrichtung.

### Beschreibung von Ausführungsbeispielen

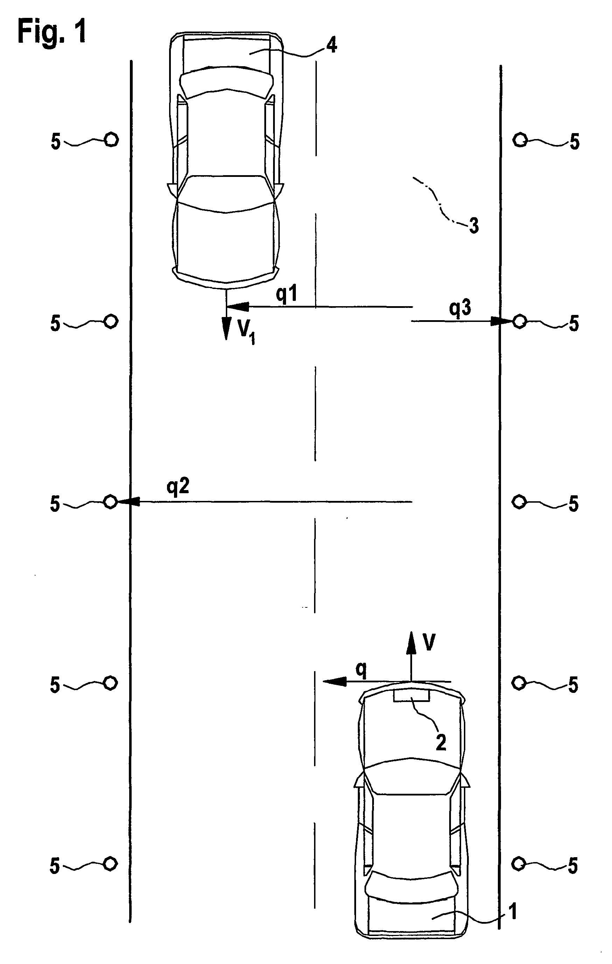

In Figur 1 ist eine Straße dargestellt, bei der für jede Fahrtrichtung eine Fahrspur vorgesehen ist. Weiterhin ist das eigene Fahrzeug 1 zu erkennen, das ein Objektdetektionssystem 2 aufweist. Dieses Objektdetektionssystem 2, das als Radar-, Laser-, Ultraschall- oder Videosensor oder als Kombination hieraus ausgeprägt sein kann, ermittelt den Abstand, die Relativgeschwindigkeit sowie den Azimutwinkel erkannter Objekte bezüglich des eigenen Fahrzeugs 1. Diese ermittelten Daten werden einem adaptiven Abstands- und Geschwindigkeitsregler zugeführt, der in Abhängigkeit der erkannten Messwerte das Fahrzeug 1 regelt. Aus der Kenntnis der Relativgeschwindigkeit erkannter Objekte sowie der eigenen Fahrzeuggeschwindigkeit lässt sich die Absolutgeschwindigkeit der detektierten Objekte ermitteln. Weiterhin lässt sich aus dem Azimutwinkel, unter dem das Objekt erkannt wird, sowie dem Abstand des Objektes, der sogenannte laterale Querversatz, ermittelt. Der laterale Querversatz ist dabei der kleinste Abstand, den das erkannte Objekt zur Fahrzeuglängsachse 3 aufweist. Dieser laterale Querversatz kann weiterhin in rechtsseitige und linksseitige laterale Querversätze unterteilt werden, wobei rechtsseitig bzw. linksseitig auf die Fahrzeuglängsachse 3, die in Bewegungsrichtung des eigenen Fahrzeugs 1 betrachtet wird, zu beziehen ist. Weiterhin ist es möglich, dem Objektdetektionssystem 2 ein Koordinatensystem zuzuordnen, das beispielsweise eine erste Achse v, die parallel zur Fahrzeuglängsachse 3 ausgerichtet ist, sowie einer orthogonal hierzu angeordneten Achse q für den lateralen Querversatz, die in Figur 1 beispielsweise linksseitige, laterale Querversätze als positive q-Werte und rechtsseitige, laterale Querversätze als negative q-Werte darstellt, aufweist. Selbstverständlich ist es auch möglich, die Querversatzachse q andersherum zu definieren, so dass rechtsseitige Querversätze positive q-Werte und linksseitige Querversätze negative q-Werte beschreiben. Für die Ermittlung der Anzahl vorhandener Fahrspuren in eigener Fahrtrichtung sowie die Erkennung der momentan benutzten Fahrspur ist es erfindungsgemäß notwendig, den lateralen Querversatz der detektierten Objekte sowie die Absolutgeschwindigkeit der detektierten Objekte zu ermitteln. So wird beispielsweise für ein entgegenkommendes Fahrzeug 4 aus der hierfür gemessenen Relativgeschwindigkeit Vrel sowie der eigenen Fahrzeuggeschwindigkeit V die Absolutgeschwindigkeit V1 des entgegenkommenden Fahrzeugs 4 ermittelt. Weiterhin wird aus dem gemessenen Abstand des entgegenkommenden Fahrzeugs 4 sowie dem Azimutwinkel der laterale Querversatz q1 für das Fahrzeug 4 ermittelt. Weiterhin werden auch stehende Objekte 5, die beispielsweise am Fahrbahnrand, wie beispielsweise Leitplanken, Fahrbahnrandbegrenzungen in Form von Leitpfosten, Verkehrsschilder oder beispielsweise Brückenpfeiler, ebenfalls als Objekte detektiert. Stehende Objekte werden insbesondere daran erkannt, dass der Betrag der Relativgeschwindigkeit der stehenden Objekte in etwa der eigenen Fahrzeuggeschwindigkeit V des eigenen Fahrzeugs 1 entsprechen. Weiterhin wird auch für stehende Objekte ein linksseitiger bzw. rechtsseitiger, lateraler Querversatz q2 bzw. q3 ermittelt. Wird beispielsweise ein Objekt 4 detektiert, das eine negative Relativgeschwindigkeit Vrel aufweist, die betragsmäßig größer ist, als die eigene Fahrzeuggeschwindigkeit V, so kann hieraus die Absolutgeschwindigkeit V1 ermittelt werden, die entgegen der eigenen Fahrzeugrichtung V angeordnet ist. Wird weiterhin für das erkannte Objekt 4 ein linksseitiger, lateraler Querversatz q1 ermittelt, der betragsmäßig kleiner als ein vorbestimmter Fahrspurbreitenwert fsb ist, kann hierdurch eine Fahrt auf einer einspurigen Straße erkannt werden, wie sie in Figur 1 beispielhaft dargestellt ist. Der vorbestimmte Fahrspurbreitenwert ist hierbei ein fest vorgegebener Wert, der in etwa die Breite einer Fahrspur repräsentiert. Dieser kann beispielsweise zwischen 3,4 m und 3,8 m betragen. Hierdurch werden Fahrbahnbreiten abgedeckt, wie sie beispielsweise auf gut ausgebauten Schnellstraßen oder Autobahnen üblich sind. Werden Objekte 5 detektiert, die eine negative Relativgeschwindigkeit Vrel aufweisen, die betragsmäßig in etwa der eigenen Fahrzeuggeschwindigkeit entspricht, so werden diese Objekte 5 als stehende Objekte erkannt. Weisen diese Objekte weiterhin einen rechtsseitigen, lateralen Querversatz q3 auf, der betragsmäßig kleiner als ein vorbestimmter Fahrspurbreitenwert fsb ist, so handelt es sich hierbei um stehende Objekte am rechten Fahrbahnrand. Werden Objekte 5 detektiert, die eine negative Relativgeschwindigkeit Vrel aufweisen, die betragsmäßig in etwa der eigenen Fahrzeuggeschwindigkeit V entspricht und die einen linksseitigen lateralen Querversatz q2 aufweisen, der betragsmäßig größer als ein vorbestimmter Fahrspurbreitenwert fsb ist, so handelt es sich hierbei um stehende Objekte am linken Fahrbahnrand. Werden derartige stehende Objekte am linken oder rechten Fahrbahnrand erkannt, die die vorgegebenen lateralen Querversätze aufweisen, so kann hierdurch ebenfalls die Fahrt auf einer einspurigen Straße erkannt werden.

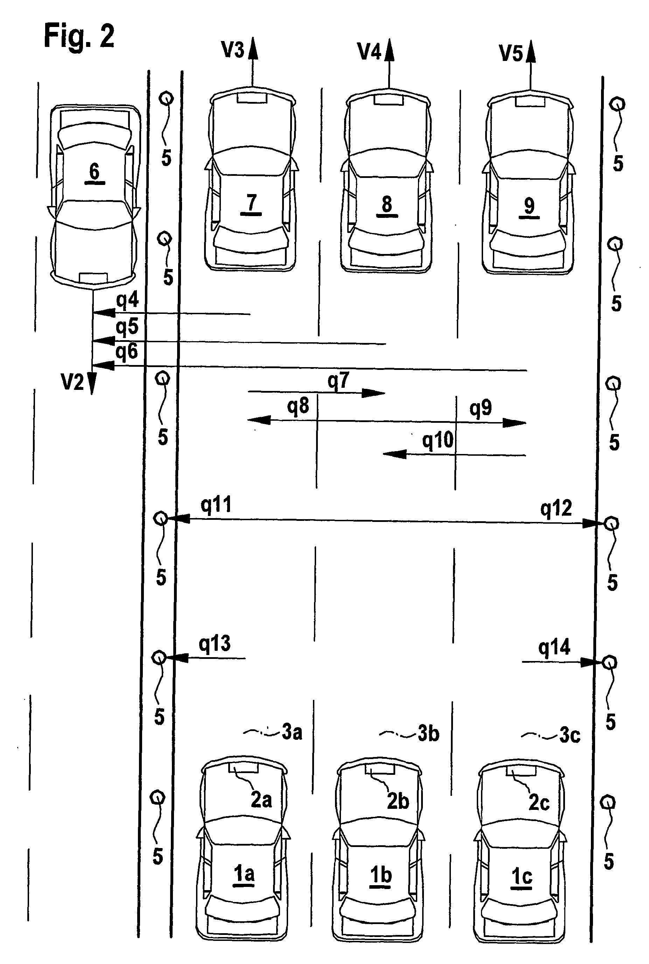

In Figur 2 ist beispielhaft die Fahrt auf einer mehrspurigen Straße dargestellt. Hierbei sind drei unterschiedliche Situationen zu unterscheiden, zum einen die Fahrt des eigenen Fahrzeugs 1a auf der linken Fahrspur einer mehrspurigen Straße, weiterhin die Fahrt des eigenen Fahrzeugs 1b auf der mittleren Fahrspur einer mehrspurigen Straße sowie die Fahrt des eigenen Fahrzeug 1c auf der rechten Spur einer mehrspurigen Straße. Für diese drei Situationen des eigenen Fahrzeugs sind jeweils Fahrzeuge 1a, 1b, 1c aufgezeichnet, die jeweils über ein Objektdetektionssystem 2a, 2b, 2c verfügen. Ebenfalls ist für jede dieser Fahrsituationen eine Fahrzeuglängsachse 3a, 3b, 3c eingezeichnet. Weiterhin sind stehende Objekte 5 an den Fahrbahnrändern dargestellt, wobei es nicht zwingend notwendig ist, dass derartige stehende Objekte vorgesehen sind. So kann beispielsweise die Situation auftreten, dass mehrspurige Fahrbahnen vorhanden sind, jedoch im Fahrbahnmittelbereich keine stehenden Objekte vorhanden sind. Weiterhin ist exemplarisch ein entgegenkommendes Fahrzeug 6 eingezeichnet, das sich auf der entgegengesetzten Fahrtrichtungsspur mit der Geschwindigkeit V2 bewegt. Weiterhin sind exemplarisch drei vorausfahrende Fahrzeuge 7, 8, 9 auf der linken, mittleren bzw. rechten Fahrbahn dargestellt, die sich mit den Geschwindigkeiten V3, V4, V5 bewegen. Wird während dem erfmdungsgemäßen Betrieb beispielsweise ein Objekt 6 erkannt, das eine negative Relativgeschwindigkeit Vrel aufweist, die betragsmäßig größer ist, als die eigene Fahrzeuggeschwindigkeit V, so handelt es sich hierbei um ein entgegenkommendes Fahrzeug. Wird darüber hinaus für dieses entgegenkommende Fahrzeug ein linksseitiger, lateraler Querversatz q4, q5, q6 festgestellt, der betragsmäßig größer, als ein vorbestimmter Fahrspurbreitenwert fsb ist, so kann daraus gefolgert werden, dass sich das Fahrzeug 1 auf einer mehrspurigen Straße auf der linken, mittleren oder rechten Fahrspur, also in der Situation 1a, 1b oder 1c befindet.

Wird ein Objekt detektiert, das eine negative Relativgeschwindigkeit Vrel aufweist, die betragsmäßig in etwa der eigenen Fahrzeuggeschwindigkeit V entspricht, also um ein stehendes Objekt, und dieses gleichzeitig einen linksseitigen, lateralen Querversatz q aufweist, der betragsmäßig kleiner als ein vorbestimmter Fahrspurbreitenwert fsb ist, also ein stehendes Objekt 5 mit dem linksseitigen lateralen Querversatz q13 detektiert wurde, so kann daraus geschlossen werden, dass sich das eigene Fahrzeug 1a auf der linken Fahrspur einer mehrspurigen Straße bewegt. Wird weiterhin ein Objekt detektiert, das entweder eine positive Relativgeschwindigkeit Vrel aufweist, oder das eine negative Relativgeschwindigkeit Vrel aufweist, die betragsmäßig etwa zwischen Null und der eigenen Fahrzeuggeschwindigkeit V liegt, so handelt es sich hierbei um ein vorausfahrendes Fahrzeug, wie es beispielsweise durch die vorherfahrenden Fahrzeuge 7, 8, 9 dargestellt ist. Wird bezüglich dieses vorherfahrenden Fahrzeuges ein rechtsseitiger, lateraler Querversatz q7 ermittelt, so kann daraus ebenfalls gefolgert werden, dass sich das eigene Fahrzeug 1a auf der linken Fahrspur einer mehrspurigen Straße bewegt. Durch die UND-Verknüpfung beider vorher beschriebener Bedingungen kann eindeutig auf die Benutzung der linken Fahrspur auf einer mehrspurigen Strasse geschlossen werden.

Wird ein Objekt durch das Objektdetektionssystem 2 detektiert, das eine negative Relativgeschwindigkeit Vrel aufweist, die betragsmäßig in etwa der eigenen Fahrzeuggeschwindigkeit V entspricht, es sich also um ein stehendes Objekt handelt und das Objekt einen beliebigen, lateralen Querversatz q11, q12 aufweist, der betragsmäßig größer, als ein vorbestimmter Fahrspurbreitenwert fsb ist, so kann daraus geschlossen werden, dass sich das eigene Fahrzeug 1b auf der mittleren Fahrspur einer mehrspurigen Straße befindet. Wird weiterhin ein Objekt detektiert, das entweder eine positive Relativgeschwindigkeit Vrel aufweist, oder das eine negative Relativgeschwindigkeit Vrel aufweist, die betragsmäßig etwa zwischen Null und der eigenen Fahrzeuggeschwindigkeit V liegt und weiterhin einen beliebigen, lateralen Querversatz aufweist, so kann hierdurch ebenfalls gefolgert werden, dass sich das eigene Fahrzeug 1b auf der mittleren Fahrspur einer mehrspurigen Straße bewegt. Wird durch das Objektdetektionssystem 2 ein Objekt detektiert, das entweder eine negative Relativgeschwindigkeit Vrel aufweist, die betragsmäßig etwa der eigenen Fahrzeuggeschwindigkeit V entspricht, es sich also bei dem Objekt um ein stehendes Objekt handelt, und das Objekt einen rechtsseitigen, lateralen Querversatz q14 aufweist, der betragsmäßig kleiner als ein vorbestimmter Fahrspurbreitenwert fsb ist, so kann daraus geschlossen werden, dass sich das eigene Fahrzeug 1c auf der rechten Fahrspur einer mehrspurigen Straße bewegt. Wird weiterhin ein Objekt detektiert, das entweder eine positive Relativgeschwindigkeit Vrel aufweist, oder das eine negative Relativgeschwindigkeit Vrel aufweist, die betragsmäßig etwa zwischen Null und der eigenen Fahrzeuggeschwindigkeit V liegt, es sich dabei also um ein vorherfahrendes schnelleres oder langsameres Fahrzeug handelt und dieses Objekt gleichzeitig einen linksseitigen, lateralen Querversatz q10 aufweist, so kann daraus geschlossen werden, dass sich das Fahrzeug 1 auf der rechten Fahrspur einer mehrspurigen Straße bewegt.

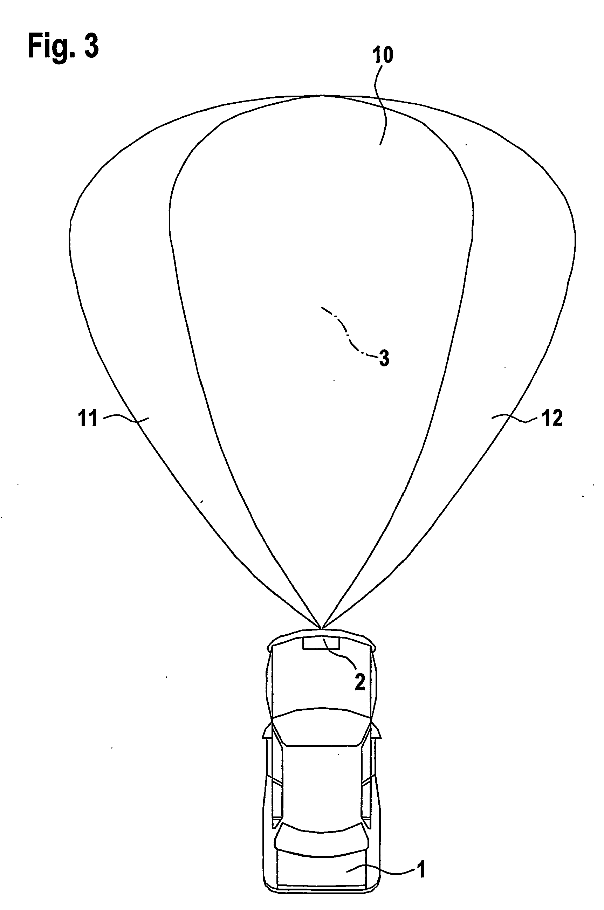

In Figur 3 ist das eigene Fahrzeug 1 dargestellt, das an der Vorderseite mit einem Objektdetektionssystem 2 ausgestattet ist. Das Objektdetektionssystem 2 weist dabei einen Sensorsichtbereich 10 auf, der vorausbefindliche fahrende oder stehende Objekte detektieren kann, wobei der Sensorsichtbereich 10 üblicherweise symmetrisch zur Fahrzeuglängsachse 3 ausgerichtet ist. Der Bereich, in dem Objekte durch das Objektdetektionssystem 2 detektiert werden können, ist dabei größer, als der Sichtbereich des Sensorsystems. Der Sichtbereich ist in Zusammenhang mit dieser Erfindung dahingehend zu verstehen, dass lediglich die erkannten Objekte, die innerhalb des Sichtbereichs liegen, bezüglich der adaptiven Abstands- und Geschwindigkeitsregelung ausgewertet und herangezogen werden. Es können somit auch Objekte außerhalb des Sichtbereichs, jedoch innerhalb des Sende- und Empfangsbereichs des Sensors vorhanden sein, die jedoch, da sie außerhalb des definierten Sichtbereichs liegen, nicht für die Regelung bezüglich Abstand und Geschwindigkeit des eigenen Fahrzeugs 1 ausgewertet werden. Erfindungsgemäß ist es möglich, den Sensorsichtbereich 10 linksseitig zu erweitern, indem ein linksseitiger, erweiterter Sichtbereich 11 vorgesehen ist. Dementsprechend ist auch ein rechtsseitiger, erweiterter Sichtbereich 12 des Objektdetektionssystems 2 definiert. Die Erweiterung des Teils des Sichtbereichs des Objektdetektionssystem, in dem die erkannten Objekte zur Regelung berücksichtigt werden können, kann beispielsweise durch einen sehr breiten Sende- und Empfangsbereich des Detektionssystems abgedeckt sein und lediglich die Berücksichtigung der in den erweiterten Sichtbereichen vorhandenen Objekte aktiviert werden. Wurde in Abhängigkeit der detektierten Objekte erkannt, dass sich das eigene Fahrzeug 1 auf einer einspurigen Straße bewegt, so ist es weiterhin möglich, den Sichtbereich 10 des Objektdetektionssystems 2 auf größere linksseitige und rechtsseitige, laterale Querversätze zu erweitern, indem entweder der linksseitige, erweiterte Sichtbereich 11 oder der rechtsseitige, erweiterte Sichtbereich 12 oder beide erweiterte Sichtbereiche 11, 12 aktiviert werden. Bei der Fahrt auf einer einspurigen Straße ist durch den linksseitig und rechtsseitig erweiterten Sichtbereich die Gefahr von Nebenspurstörungen sehr gering, da lediglich vorausfahrende Fahrzeuge auf der eigenen Spur vorhanden sind, entgegenkommende Fahrzeuge auf der Nachbarspur vorhanden sind, sowie stehende Objekte an den Fahrbahnrändern vorhanden sind. Nebenspurstörungen in Folge von Fahrzeugen, die sich in die gleiche Richtung, wie das eigene Fahrzeug 1 bewegen, jedoch auf benachbarten Fahrspuren fahren, können bei einspurigen Straßen ausgeschlossen werden und somit ein sehr breiter Sensorsichtbereich aktiviert werden. Wird in Abhängigkeit der erkannten Objekte die Benutzung der linken Fahrspur einer mehrspurigen Straße erkannt, so ist es vorteilhaft, den Sichtbereich 10 des Objektdetektionssystems 2 nur auf größere, linksseitige, laterale Querversätze q zu erweitern, indem zu dem normalen Sichtbereich 10 nur der linksseitige, erweiterte Sichtbereich 11 aktiviert wird. Da auf der rechten, benachbarten Fahrspur des eigenen Fahrzeugs 1 Fahrzeuge vorhanden sein können, die das Reglerverhalten des adaptiven Abstands- und Geschwindigkeitsreglers beeinflussen können, ohne dass dieses gewünscht wird, ist der rechsseitige, erweiterte Sichtbereich 12 in dieser Situation nicht zu aktivieren. Wurde in Abhängigkeit der erkannten Objekte durch das Objektdetektionssystem 2 erkannt, dass sich das eigene Fahrzeug 1 auf der rechten Fahrspur einer mehrspurigen Straße bewegt, so ist es vorteilhaft, dass der Sichtbereich 10 auf größere, rechtsseitige, laterale Querversätze q erweitert wird, indem der rechtsseitige, erweiterte Sichtbereich 12 aktiviert wird und der linksseitige, erweiterte Sichtbereich 11 deaktiviert wird.

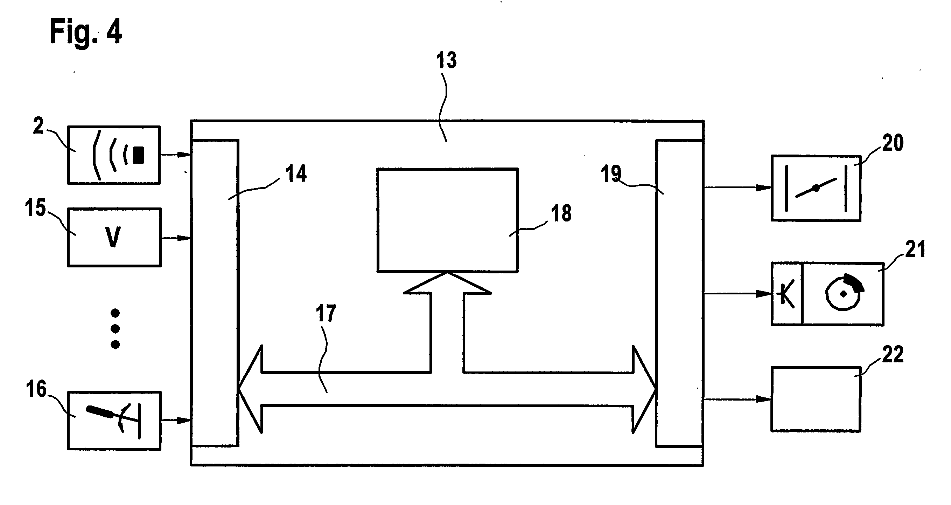

In Figur 4 ist ein Blockschaltbild einer Ausführungsform der erfindungsgemäßen Vorrichtung dargestellt. Zu erkennen ist der Abstands- und Geschwindigkeitsregler 13, der unter anderem eine Eingangsschaltung 14 aufweist. Mittels der Eingangsschaltung 14 werden dem adaptiven Abstands- und Geschwindigkeitsregler 13 Eingangsgrößen zugeführt. Diese Eingangsgrößen stammen beispielsweise von einem Objektdetektionssystem 2, das als Radar-, Laser-, Ultraschall-, Videosystem oder einer Kombination hieraus ausgeführt sein kann. Dieses Objektdetektionssystem 2 ist an der Fahrzeugfront angebracht und besitzt einen Sensorsichtbereich gemäß Figur 3. Dieses Objektdetektionssystem 2 erkennt Objekte und bestimmt deren Abstand zum eigenen Fahrzeug 1, die Relativgeschwindigkeit Vrel des Objektes in Bezug auf das eigene Fahrzeug 1 sowie den Azimutwinkel, unter dem das Objekt bezüglich der Fahrzeuglängsachse 3 detektiert wurde. Aus diesen, der Eingangsschaltung 14 zugeführten Größen kann der adaptive Abstands- und Geschwindigkeitsregler die Absolutgeschwindigkeit der detektierten Objekte sowie deren lateralen Querversatz q berechnen. Weiterhin wird der Eingangsschaltung 14 mittels eines Geschwindigkeitssensors 15 die Geschwindigkeit V des eigenen Fahrzeugs 1 zugeführt. Die Kenntnis der eigenen Fahrzeuggeschwindigkeit V ist dabei für den Regler wichtig, da nur in Zusammenhang mit der eigenen Fahrzeuggeschwindigkeit aus der Relativgeschwindigkeit Vrel des erkannten Objektes dessen Absolutgeschwindigkeit berechnet werden kann. Darüber hinaus ist es möglich, der Eingangsschaltung 14 weitere Signale zuzuführen, beispielsweise Signale von einer Bedieneinrichtung 16, mittels der der adaptive Abstands- und Geschwindigkeitsregler 13 ein- und ausschaltbar ist, sowie Systemeinstellungen verändert und vorgenommen werden können. Die der Eingangsschaltung 14 zugeführten Signale werden mittels einer Datenaustauscheinrichtung 17 einer Berechnungseinrichtung 18 zugeführt. In der Berechnungseinrichtung 18 werden aus den Eingangssignalen Stellgrößen berechnet, die an nachgeordnete Stellelemente 20, 21, 22 ausgebbar sind. Weiterhin ermittelt die Berechnungseinrichtung 18 aus den mittels der Eingangsschaltung 14 zugeführten Signalen, ob sich das eigene Fahrzeug 1 momentan auf einer einspurigen Straße bewegt, auf einer mehrspurigen Straße bewegt, sowie für letzteren Fall, auf welcher Fahrspur der mehrspurigen Straße sich das eigene Fahrzeug 1 momentan bewegt. Die von der Berechnungseinrichtung 18 ermittelten Stellsignale werden mittels der Datenaustauscheinrichtung 17 an eine Ausgangsschaltung 19 weitergegeben. Die Ausgangsschaltung 19 gibt beispielsweise ein Beschleunigungssignal an ein leistungsbestimmendes Stellelement 20 einer Antriebseinrichtung aus. Dabei kann es sich beispielsweise um eine elektrisch steuerbare Drosselklappe einer Brennkraftmaschine handeln oder um eine Kraftstoffmengenzumesseinrichtung eines Speichereinspritzsystems oder um eine Regelstange einer Einspritzpumpe handeln. Wurde durch die Berechnungseinrichtung 18 in Abhängigkeit der Eingangssignale ermittelt, dass das eigene Fahrzeug 1 beschleunigt werden soll, so wird dem leistungsbestimmenden Stellelement 20 ein Beschleunigungsanforderungssignal ausgegeben. Ermittelt die Berechnungseinrichtung 18 in Abhängigkeit der Eingangssignale, dass das eigene Fahrzeug 1 verzögert werden muss, da beispielsweise ein vorausfahrendes, langsameres Fahrzeug vorhanden ist, so wird über die Ausgangsschaltung 19 ein Verzögerungssignal an die Verzögerungseinrichtungen 21 des Fahrzeugs ausgegeben. Bei den Verzögerungseinrichtungen 21 kann es sich beispielsweise um eine elektrisch ansteuerbare, hydraulische Bremsanlage oder um eine direkt elektrisch steuerbare Bremsanlage eines Kraftfahrzeugs handeln. Weiterhin wird über die Ausgangsschaltung 19 ein Verstellsignal für den Sichtbereich des Objektdetektionssystems 2 ausgegeben. Hat die Berechnungseinrichtung 18 in Abhängigkeit der ihr zugeführten Eingangssignale eine Fahrsituation erkannt, in der der linke, erweiterte Sichtbereich 11 oder der rechte, erweiterte Sichtbereich 12 oder beide erweiterte Sichtbereiche aktiviert werden sollen, so wird mittels der Ausgangsschaltung 19 ein Verstellsignal an die Verstelleinrichtung für den Sichtbereich 22 ausgegeben, die den Objektdetektionssensor 2 entsprechend den Ausführungen in Figur 3 verändert. Ebenso kann der erweiterte linke Sichtbereich 11 oder der erweiterte rechte Sichtbereich 12 oder beide erweiterte Sichtbereiche entsprechend der von der Berechnungseinrichtung 18 in Abhängigkeit der ihr zugeführten Eingangssignale erkannten Fahrsituation deaktiviert werden.

## Patentansprüche

1. Verfahren zur Fahrspurerkennung für ein Fahrzeug, das mit einer adaptiven Abstands- und Geschwindigkeitsregelung (12) ausgestattet ist, wobei dem adaptiven Abstands- und Geschwindigkeitsregler (12) mittels einem Objektdetektionssystem (2) die Relativgeschwindigkeit (vrel) detektierter Objekte, der seitliche Versatz (q) der detektierten Objekte bezüglich der Fahrzeuglängsachse (3, 3a, 3b, 3c) und die Geschwindigkeit (v) des eigenen Fahrzeugs zugeführt wird, wobei aus der Relativgeschwindigkeit der Objekte (vrel) und der eigenen Fahrzeuggeschwindigkeit (v) ermittelt wird, ob es sich um ein entgegenkommendes, stehendes oder ein in die gleiche Richtung wie das eigene Fahrzeug bewegtes Objekt (5, 6, 7, 8) handelt, **dadurch gekennzeichnet, dass** in Verbindung mit dem berechneten, lateralen Querversatz (q) des Objektes bezüglich der Fahrzeuglängsachse (3, 3a, 3b, 3c) die Anzahl der vorhandenen Fahrspuren und die momentan durch das eigene Fahrzeug befahrene Fahrspur ermittelt wird und der Detektionsbereich (9, 10, 11) des Objektdetektionssystems (2) in Abhängigkeit der erkannten Fahrspur verändert wird.

2. Verfahren nach Anspruch 1, **dadurch gekennzeichnet, dass** bei rechtssinnigem Verkahr eine Fahrt auf einer einspurigen Strasse erkannt wird, wenn
- Objekte (4) detektiert werden, die eine negative Relativgeschwindigkeit (vrel) aufweisen, die betragsmäßig größer ist als die eigene Fahrzeugeschwindigkeit (v) und die einen linksseitigen, lateralen Querversatz (q) aufweisen, der betragsmäßig kleiner als ein vorbestimmter Fahrspurbreitenwert (fsb) ist, und/oder
- Objekte (5) detektiert werden, die eine negative Relativgeschwindigkeit (vrel) aufweisen, die betragsmäßig in etwa der eigenen Fahrzeuggeschwindigkeit (v) entspricht und die einen rechtsseitigen, lateralen Querversatz (q) aufweisen, der betragsmäßig kleiner als ein vorbestimmter Fahrspurbreitenwert (fsb) ist, und/oder
- Objekte (5) detektiert werden, die eine negative Relativgeschwindigkeit (vrel) aufweisen, die betragsmäßig in etwa der eigenen Fahrzeuggeschwindigkeit (v) entspricht und die einen linksseitigen, lateralen Querversatz (q) aufweisen, der betragsmäßig größer als ein vorbestimmter Fahrspurbreitenwert (fsb) ist.

3. Verfahren nach Anspruch 1 oder 2, **dadurch gekennzeichnet, dass** bei rechtssinnigem Verkehr eine Fahrt auf einer mehrspurigen Strasse erkannt wird, wenn
- Objekte (6) detektiert werden, die eine negative Relativgeschwindigkeit aufweisen, die betragsmäßig größer ist als die eigene Fahrzeugeschwindigkeit (v) und die einen linksseitigen, lateralen Querversatz (q) aufweisen, der betragsmäßig größer als ein vorbestimmter Fahrspurbreitenwert (fsb) ist.

4. Verfahren nach einem der vorhergehenden Ansprüche, **dadurch gekennzeichnet, dass** bei rechtssinnigem Verkehr die Benutzung der linken Fahrspur einer mehrspurigen Strasse erkannt wird (1a), wenn
- Objekte (5) detektiert werden, die eine negative Relativgeschwindigkeit (vrel) aufweisen, die betragsmäßig in etwa der eigenen Fahrzeuggeschwindigkeit (v) entspricht und die einen linksseitigen, lateralen Querversatz (q) aufweisen, der betragsmäßig kleiner als ein vorbestimmter Fahrspurbreitenwert (fsb) ist und/oder
- Objekte (7, 8, 9) detektiert werden, die entweder eine positive Relativgeschwindigkeit (vrel) oder eine negative Relativgeschwindigkeit (vrel), die betragsmäßig etwa zwischen Null und der eigenen Fahrzeuggeschwindigkeit (v) liegt, aufweisen, und einen rechtsseitigen, lateralen Querversatz (q) aufweisen.

5. Verfahren nach einem der vorhergehenden Ansprüche, **dadurch gekennzeichnet, dass** bei rechtssinnigem Verkehr die Benutzung einer mittleren Fahrspur einer mehrspurigen Strasse erkannt wird (1b), wenn
- Objekte (5) detektiert werden, die eine negative Relativgeschwindigkeit aufweisen, die betragsmäßig in etwa der eigenen Fahrzeuggeschwindigkeit entspricht und die einen beliebigen, lateralen Querversatz (q) aufweisen, der betragsmäßig größer als ein vorbestimmter Fahrspurbreitenwert (fsb) ist und/oder Objekte (7, 8, 9) detektiert werden, die entweder eine positive Relativgeschwindigkeit (vrel) oder eine negative Relativgeschwindigkeit (vrel), die betragsmäßig etwa zwischen Null und der eigenen Fahrzeuggeschwindigkeit (v) liegt, aufweisen, und einen beliebigen, lateralen Querversatz (q) aufweisen.

6. Verfahren nach einem der vorhergehenden Ansprüche, **dadurch gekennzeichnet, dass** bei rechtssinnigem Verkehr die Benutzung der rechten Fahrspur einer mehrspurigen Strasse erkannt wird (1c), wenn
- Objekte (5)detektiert werden, die eine negative Relativgeschwindigkeit (vrel) aufweisen, die betragsmäßig in etwa der eigenen Fahrzeuggeschwindigkeit (v) entspricht und die einen rechtsseitigen, lateralen Querversatz (q) aufweisen, der betragsmäßig kleiner als ein vorbestimmter Fahrspurbreitenwert (fsb) ist und/oder
- Objekte (7, 8, 9) detektiert werden, die entweder eine positive Relativgeschwindigkeit (vrel) oder eine negative Relativgeschwindigkeit (vrel), die betragsmäßig etwa zwischen Null und der eigenen Fahrzeuggeschwindigkeit (v) liegt, aufweisen, und einen linksseitigen, lateralen Querversatz (q) aufweisen.

7. Verfahren nach einem der vorhergehenden Ansprüche, **dadurch gekennzeichnet, dass** wenn eine Fahrt auf einer einspurigen Strasse erkannt wird, der Teil des Sichtbereichs (10) des Objektdetektionssystems (2), in dem die erkannten Objekte zur Regelung berücksichtigt werden können, auf größere, linksseitige (11) und rechtsseitige (12), laterale Querversätze (q) erweitert wird.

8. Verfahren nach einem der vorhergehenden Ansprüche, **dadurch gekennzeichnet, dass** wenn die Benutzung der linken Fahrspur einer mehrspurigen Strasse erkannt wird, der Teil des Sichtbereichs (10) des Objektdetektionssystems (2), in dem die erkannten Objekte zur Regelung berücksichtigt werden können, auf größere, linksseitige (11), laterale Querversätze (q) erweitert wird.

9. Verfahren nach einem der vorhergehenden Ansprüche, **dadurch gekennzeichnet, dass** wenn die Benutzung der rechten Fahrspur einer mehrspurigen Strasse erkannt wird, der Teil des Sichtbereichs (10) des Objektdetektionssystems (2), in dem die erkannten Objekte zur Regelung berücksichtigt werden können, auf größere, rechtsseitige (12), laterale Querversätze erweitert wird.

10. Verfahren nach einem der vorhergehenden Ansprüche, **dadurch gekennnzeichnet,** dass die ermittelte Anzahl an Fahrspuren und die Erkennung der momentan befahrenen Fahrspur erst dann wirksam wird, wenn das ermittelte Ergebnis über eine vorbestimmte Zeitdauer (t) unverändert bleibt.

11. Verfahren nach einem der vorhergehenden Ansprüche, **dadurch gekennzeichnet, dass** der vorbestimmte Fahrspurbreitenwert (fsb) zwischen 3,4 Meter und 3,8 Meter beträgt.

12. Vorrichtung zur Fahrspurerkennung und Fahrspurzuordnung für ein Fahrzeug, das mit einer adaptiven Abstands- und Geschwindigkeitsregelung (12) ausgestattet ist, wobei dem adaptiven Abstands- und Geschwindigkeitsregler (12) mittels einem Objektdetektionssystem (2) die Relativgeschwindigkeit (vrel) detektierter Objekte, der seitliche Querversatz (q) der detektierten Objekte (4, 5, 6, 7, 8, 9) bezüglich der Fahrzeuglängsachse (3, 3a, 3b, 3c) und die Geschwindigkeit (v) des eigenen Fahrzeugs zugeführt wird, **dadurch gekennzeichnet, dass** die Vorrichtung zur Durchführung des Verfahrens nach Anspruch 1 vorgesehen ist.

13. Vorrichtung nach Anspruch 12, **dadurch gekennzeichnet, dass** das Objektdetektionssystem (2) ein Radarsensor, ein Lasersensor, ein Ultraschallsensor, ein Videosensor oder eine Kombination hieraus aufweist.

## Claims

1. Method for detecting lanes for a vehicle which is equipped with an adaptive cruise controller (12) with inter-vehicle distance control facility, the relative velocity (vrel) of detected objects, the lateral offset (q) of the detected objects with respect to the longitudinal axis (3, 3a, 3b, 3c) of the vehicle and the velocity (v) of the driver's own vehicle being fed into the adaptive cruise controller (12) with inter-vehicle distance control facility by means of an object detection system (2), it being determined from the relative velocity of the objects (vrel) and of the velocity (v) of the driver's own vehicle whether the object (5, 6, 7, 8) is an oncoming one, a stationary one or one which is moving in the same direction as the driver's own vehicle, **characterized in that** the number of existing lanes and the lane which is being travelled on by the driver's own vehicle at that particular time are determined in conjunction with the calculated lateral offset (q) of the object with respect to the longitudinal axis (3, 3a, 3b, 3c) of the vehicle, and the detection range (9, 10, 11) of the object detection system (2) is changed as a function of the detected lane.

2. Method according to Claim 1, **characterized in that** in the case of traffic driving on the right, travel on a single-lane road is detected if
- objects (4) are detected which have a negative relative velocity (vrel) which is larger in absolute terms than the velocity (v) of the driver's own vehicle and which have a left-hand sided lateral offset (q) which is smaller in absolute terms than a predetermined lane width value (fsb), and/or
- objects (5) are detected which have a negative relative velocity (vrel) which corresponds in absolute terms approximately to the velocity (v) of the driver's own vehicle and which have a right-hand sided lateral offset (q) which is smaller in absolute length than a predetermined lane width value (fsb), and/or
- objects (5) are detected which have a negative relative velocity (vrel) which corresponds in absolute terms approximately to the velocity (v) of the driver's own vehicle and which have a left-hand sided lateral offset (q) which is larger in absolute terms than a predetermined lane width value (fsb).

3. Method according to Claim 1 or 2, **characterized in that** in the case of traffic driving on the right, travel on a multi-lane road is detected if
- objects (6) are detected which have a negative relative velocity which is higher in absolute terms than the velocity (v) of the driver's own vehicle and which have a left-hand sided lateral offset (q) which is larger in absolute terms than a predetermined lane width value (fsb).

4. Method according to one of the preceding claims, **characterized in that** in the case of traffic driving on the right, the use of the left-hand lane of a multi-lane road is detected (1a) if
- objects (5) are detected which have a negative relative velocity (vrel) which corresponds in absolute terms approximately to the velocity (v) of the driver's own vehicle and which have a left-hand sided lateral offset (q) which is smaller in absolute terms than a predetermined lane width value (fsb) and/or
- objects (7, 8, 9) are detected which either have a positive relative velocity (vrel) or a negative relative velocity (vrel) which lies in absolute terms approximately between zero and the velocity (v) of the driver's own vehicle and have a right-hand sided lateral offset (q).

5. Method according to one of the preceding claims, **characterized in that** in the case of traffic driving on the right, the use of a centre lane of a multi-lane road is detected (1b) if
- objects (5) are detected which have a negative relative velocity which corresponds in absolute terms approximately to the velocity of the driver's own vehicle and which have any lateral offset (q) which is larger in absolute terms than a predetermined lane width value (fsb) and/or
- objects (7, 8, 9) are detected which either have a positive relative velocity (vrel) or a negative relative velocity (vrel) which lies in absolute terms approximately between zero and the velocity (v) of the driver's own vehicle, and have any lateral offset (q).

6. Method according to one of the preceding claims, **characterized in that** in the case of traffic driving on the right, the use of the right-hand lane of a multi-lane road is detected (1c) if
- objects (5) are detected which have a negative relative velocity (vrel) which corresponds in absolute terms approximately to the velocity (v) of the driver's own vehicle and which have a right-hand sided lateral offset (q) which is smaller in absolute terms than a predetermined lane width value (fsb) and/or
- objects (7, 8, 9) are detected which either have a positive relative velocity (vrel) or a negative relative velocity (vrel) which lies in absolute terms approximately between zero and the velocity (v) of the driver's own vehicle, and have any left-hand sided lateral offset (q).

7. Method according to one of the preceding claims, **characterized in that** if travel on a single-lane road is detected, the part of the field of vision (10) of the object detection system (2) in which the detected objects can be taken into account for control is widened to larger, left-hand sided (11) and right-hand sided (12) lateral offsets (q).

8. Method according to one of the preceding claims, **characterized in that** if the use of the left-hand lane of a multi-lane road is detected, the part of the field of vision (10) of the object detection system (2) in which the detected objects can be taken into account for control is widened to larger, left-hand sided (11) lateral offsets (q).

9. Method according to one of the preceding claims, **characterized in that** if the use of the right-hand lane of a multi-lane road is detected, the part of the field of vision (10) of the object detection system (2) in which the detected objects can be taken into account for control is widened to larger, right-hand sided (12) lateral offsets.

10. Method according to one of the preceding claims, **characterized in that** the number of lanes which is detected and the detection of the lane which is being travelled on at that particular time does not become effective until the determined result remains unchanged over a predetermined time period (t).

11. Method according to one of the preceding claims, **characterized in that** the predetermined lane width value (fsb) is between 3.4 metres and 3.8 metres.

12. Device for detecting lanes and assigning lanes for a vehicle which is equipped with an adaptive cruise controller (12) with an inter-vehicle distance control facility, the relative velocity (vrel) of detected objects, the lateral offset (q) of the detected objects (4, 5, 6, 7, 8, 9) with respect to the longitudinal axis (3, 3a, 3b, 3c) of the vehicle and the velocity (v) of the driver's own vehicle being fed to the adaptive cruise controller (12) with an inter-vehicle distance control facility by means of an object detection system (2), **characterized in that** the device for carrying out the method according to Claim 1 is provided.

13. Device according to Claim 12, **characterized in that** the object detection system (2) has a radar sensor, a laser sensor, an ultrasonic sensor, a video sensor or a combination thereof.

## Revendications

1. Procédé de détection de voie de circulation pour un véhicule équipé d'une régulation adaptative de distance et de vitesse (12) selon lequel, un système de détection d'objets (2), fournit au régulateur adaptatif de distance et de vitesse (12) à l'aide la vitesse relative (vrel) des objets détectés, le déport transversal latéral (q) des objets détectés par rapport à l'axe longitudinal (3, 3a, 3b, 3c) du véhicule et la vitesse (v) du propre véhicule, et
à partir de la vitesse relative des objets (vrel) et de la vitesse propre du véhicule (v), on détermine s'il s'agit d'un objet (5, 6, 7, 8) venant en sens inverse, immobile ou se déplaçant dans la même direction que le propre véhicule,
**caractérisé en ce qu'**
en liaison avec le déport transversal latéral (q) calculé, de l'objet par rapport à l'axe longitudinal du véhicule (3, 3a, 3b, 3c), on détermine le nombre de voies de circulation existantes et la voie de circulation empreintée momentanément par le propre véhicule, et
on modifie la plage de détection (9, 10, 11) du système de détection d'objets (2) en fonction de la voie de circulation reconnue.

2. Procédé selon la revendication 1,
**caractérisé en ce que**
pour une circulation à droite, on reconnaît le déplacement sur une chaussée à une seule voie si,
- on détecte des objets (4) ayant une vitesse relative (vrel) dont l'amplitude est supérieure à la vitesse propre (v) du véhicule et qui ont un déport transversal latéral (q) du côté gauche, dont l'amplitude est inférieure à une valeur prédéfinie de largeur de voie (fsb), et/ou
- on détecte des objets (5) qui ont une vitesse relative négative (vrel) dont l'amplitude correspond sensiblement à celle de la propre vitesse (v) du véhicule et qui ont un déport transversal, latéral (q) du côté droit, dont l'amplitude est inférieure à la valeur prédéfinie de la largeur de voie de circulation (fsb), et/ou
- on détecte des objets (5) ayant une vitesse relative négative (vrel) dont l'amplitude correspond sensiblement à la propre vitesse (v) du véhicule et ayant un déport transversal (q), latéral du côté gauche dont l'amplitude est supérieure à une largeur de voie de circulation, prédéfinie (fsb).

3. Procédé selon l'une quelconque des revendications 1 ou 2,
**caractérisé en ce qu'**
en cas de circulation à droite, on reconnaît une circulation sur une chaussée à plusieurs voies si,
- on détecte des objets (6) ayant une vitesse relative négative dont l'amplitude est supérieure à la propre vitesse de circulation du véhicule et qui ont un déport transversal latéral côté gauche (q) dont l'amplitude est supérieure à une largeur prédéfinie de voie de circulation (fsb).

4. Procédé selon l'une quelconque des revendications précédentes,
**caractérisé en ce qu'**
en cas de circulation à droite, on reconnaît l'utilisation de la voie de circulation gauche d'une chaussée à plusieurs voies (la) si,
- on détecte des objets (5) ayant une vitesse relative négative (vrel) dont l'amplitude correspond sensiblement à celle de la vitesse propre du véhicule (v) et qui ont un déport transversal latéral (q) côté gauche dont l'amplitude est inférieure à une valeur prédéfinie de largeur de voie (fsb), et/ou
- on détecte des objets (7, 8, 9) qui ont soit une vitesse relative positive (vrel) soit une vitesse relative négative (vrel) dont l'amplitude est comprise entre environ zéro et la propre vitesse du véhicule (v) et qui ont un déport transversal (q), latéral, du côté droit.

5. Procédé selon l'une quelconque des revendications précédentes,
**caractérisé en ce qu'**
en cas de circulation à droite, on reconnaît l'utilisation d'une voie de circulation médiane d'une chaussée à plusieurs voies (1b) si,
- on détecte des objets (5) qui ont une vitesse relative négative dont l'amplitude correspond sensiblement à celle de la vitesse propre du véhicule et qui ont un déport transversal latéral (q) quelconque dont l'amplitude est supérieure à une largeur de voie de circulation (fsb) prédéfinie, et/ou
- on détecte des objets (7, 8, 9) qui ont soit une vitesse relative positive (vrel) soit une vitesse relative négative (vrel) dont l'amplitude est comprise entre environ zéro et la vitesse propre du véhicule (v) et qui ont un décalage transversal (q), latéral, quelconque.

6. Procédé selon l'une quelconque des revendications précédentes,
**caractérisé en ce qu'**
en cas de circulation à droite, on reconnaît l'utilisation de la voie de circulation droite sur une chaussée à plusieurs voies (1c) si,
- on détecte des objets (5) ayant une vitesse relative négative (vrel) dont l'amplitude correspond sensiblement à celle de la vitesse propre du véhicule (v) et qui ont un déport transversal latéral (q) du côté droit dont l'amplitude est inférieure à une largeur de voie de circulation (fsb) prédéfinie, et/ou
- on détecte des objets (7, 8, 9) qui ont soit une vitesse relative positive (vrel) soit une vitesse relative négative (vrel) dont l'amplitude est comprise entre sensiblement zéro et la propre vitesse du véhicule (v) et qui ont un déport transversal (q), latéral, du côté gauche.

7. Procédé selon l'une quelconque des revendications précédentes,
**caractérisé en ce que**
si on reconnaît une circulation sur une chaussée à une voie, la partie de la plage de visibilité (10) du système de détection d'objets (2) dans laquelle on doit tenir compte des objets reconnus pour la régulation, est étendue pour des déports transversaux (q), latéraux plus grands du côté gauche (11) et du côté droit (12).

8. Procédé selon l'une quelconque des revendications précédentes,
**caractérisé en ce que**
si l'on reconnaît l'utilisation de la voie de circulation gauche d'une chaussée à plusieurs voies, on étend la partie de la plage de visibilité (10) du système de détection d'objets (2) dans laquelle on peut tenir compte des objets reconnus pour la régulation, en l'étendant à des déports transversaux (q), latéraux plus grands du côté gauche (11).

9. Procédé selon l'une quelconque des revendications précédentes,
**caractérisé en ce que**
si l'on a reconnu l'utilisation de la voie de circulation droite d'une chaussée à plusieurs voies, on étend la partie de la plage de visibilité (10) du système de détection d'objets (2) dans laquelle les objets reconnus sont pris en compte pour la régulation, en étendant à des déports transversaux latéraux plus grands du côté droit (12).

10. Procédé selon l'une quelconque des revendications précédentes,
**caractérisé en ce que**
le nombre déterminé de voies de circulation et la reconnaissance de la voie de circulation utilisée instantanément ne deviennent actifs que si le résultat obtenu reste inchangé pendant une durée prédéfinie (t).

11. Procédé selon l'une quelconque des revendications précédentes,
**caractérisé en ce que**
la valeur prédéfinie de la largeur de voie de circulation (fsb) est comprise entre 3,4 mètres et 3,8 mètres.

12. Dispositif de détection de voie de circulation et d'association de voie de circulation pour un véhicule équipé d'une régulation adaptative de distance et de vitesse (12),
le régulateur adaptatif de distance et de vitesse (12) recevant par un système de détection d'objets (2), la vitesse relative (vrel) des objets détectés, le déport transversal latéral (q) des objets détectés (4, 5, 6, 7, 8, 9) par rapport à l'axe longitudinal du véhicule (3, 3a, 3b, 3c) et la vitesse (v) du véhicule propre,
**caractérisé en ce que**
le dispositif est destiné à la mise en oeuvre du procédé selon la revendication 1.

13. Dispositif selon la revendication 12,
**caractérisé en ce que**
le système de détection d'objets (2) est un capteur radar, un capteur laser, un capteur à ultrasons, un capteur vidéo ou une combinaison de tels capteurs.
